(19) **Europäisches Patentamt**

**European Patent Office**

**Office européen des brevets**

(11) **EP 1 679 342 A1**

(12) **EUROPEAN PATENT APPLICATION**
published in accordance with Art. 158(3) EPC

(43) Date of publication:
**12.07.2006 Bulletin 2006/28**

(51) Int Cl.:
***C08L 21/00*** (1985.01)    ***C08K 3/36*** (1990.01)

(21) Application number: **04793232.2**

(22) Date of filing: **29.10.2004**

(86) International application number:
**PCT/JP2004/016124**

(87) International publication number:
**WO 2005/042632 (12.05.2005 Gazette 2005/19)**

(84) Designated Contracting States:
**DE FR GB IT**

(30) Priority: **31.10.2003 JP 2003372646**

(71) Applicants:
- **ZEON CORPORATION**
  **Tokyo 100-8246 (JP)**
- **TOKUYAMA CORPORATION**
  **Shunan-shi,**
  **Yamaguchi-ken 745-8648 (JP)**

(72) Inventors:
- **KARATO, Takeshi,**
  **c/o ZEON CORPORATION**
  **Tokyo 100-8246 (JP)**

- **CHINO, Yoshihiro,**
  **c/o ZEON CORPORATION**
  **Tokyo 100-8246 (JP)**
- **WATANABE, Kazutaka,**
  **c/o Tokuyama Corporation**
  **Shunan-shi,**
  **Yamaguchi 745-8648 (JP)**
- **YATABE, Osamu,**
  **c/o Tokuyama Corporation**
  **Shunan-shi,**
  **Yamaguchi 745-8648 (JP)**

(74) Representative: **Albrecht, Thomas et al**
**Kraus & Weisert,**
**Thomas-Wimmer-Ring 15**
**80539 München (DE)**

(54) **SILICA-CONTAINING CONJUGATED DIENE BASED RUBBER COMPOSITION AND FORMED ARTICLE**

(57) A silica-containing conjugated diene rubber composition comprising a conjugated diene rubber - silica mixture (A) containing at least 30 wt% of toluene insoluble components obtainable by co-coagulating an aqueous dispersion or solution of conjugated diene rubber (a) having a glass transition temperature of -120 to 0°C with an aqueous dispersion of silica, blended with a conjugated diene rubber (b) having a glass transition temperature such that the difference in absolute value between the glass transition temperature of rubber (b) and that of rubber (a) is 3 to 100 °C.

According to the invention, it is possible to provide a rubber composition having highly balanced fuel efficiency, wet grip performance, mechanical strength, wear resistance and low temperature brittleness resistance; and suitably used for tire treads.

**Description**

TECHNICAL FIELD

The present invention relates to a new silica-containing rubber composition and particularly relates to a rubber composition suitable for tire tread and a crosslinked molding of the rubber composition.

BACKGOUND ART

A rubber composition for tire tread is required to satisfy a variety of conflicting characteristics, such as a fuel efficiency, grip performance, mechanical strength, wear resistance and low temperature brittleness resistance. Therefore, it is difficult to balance these characteristics when one kind of rubber is used in the rubber composition and a plurality of kinds of diene rubbers are generally combined.

Furthermore, a method of improving the characteristics by controlling dispersibility of carbon black used conventionally as filler of a rubber composition for tire has been also tried at the time of combining a plurality of diene rubbers. For example, the patent article 1 discloses controlling of properties of a rubber composition by unevenly providing carbon black in one material rubber in the rubber composition obtained by blending two or more kinds of rubbers. However, it has been pointed out that processing of the rubber composition is difficult.

On the other hand, to reduce energy of kneading carbon black and improve workability, a method of mixing and co-coagulating rubber latex and aqueous suspension of carbon black to obtain a wet processed carbon black-filled rubber composition has been disclosed (for example, refer to the patent article 2). A rubber composition obtained by the method has preferable dispersibility of carbon black and excellent mechanical characteristics, so that it is widely used for tire parts, etc.

Thus, there is a proposal of eliminating the problem of workability explained above by using a wet processed carbon black-filled rubber composition as one material rubber when blending two or more kinds of rubbers (refer to the patent article 3). However, a rubber composition obtained by the method was insufficient as a material for tire tread requiring higher balance of trade-off characteristics of a fuel efficiency and grip performance ever.

[Patent Article 1] The Japanese Unexamined Patent Publication No. 9-67469
[Patent Article 2] The Japanese Unexamined Patent Publication No. 59-49247
[Patent Article 3] The Japanese Unexamined Patent Publication No. H10-226736

DISCLOSURE OF THE INVENTION

An object of the present invention is to provide a rubber composition having highly balanced fuel efficiency, wet grip performance, mechanical strength, wear resistance and low temperature brittleness resistance suitably used for tire tread, and a molding formed by crosslinking the rubber composition.

The present inventors have focused on the fact that a silica filled rubber composition is capable of attaining both of a fuel efficiency and high grip performance comparing with a carbon black-filled rubber composition. On the other hand, there were disadvantages that mechanical strength and wear resistance, etc. were poor in a crosslinked rubber molding obtained by crosslinking the same, so that they pursued further study to improve the mechanical strength and wear resistance while maintaining the fuel efficiency and high wet grip performance. As a result, they found that a rubber composition suitably used for tire tread having highly balanced fuel efficiency, wet grip performance, mechanical strength, wear resistance and low temperature brittleness could be obtained by using a silica-containing conjugated diene rubber composition obtained by co-coagulating conjugated diene rubber latex and aqueous dispersion of silica and by blending a mixture, wherein a ratio of the silica to a total amount of a conjugated diene rubber component bonded with silica and to be insoluble in the solvent (solvent insoluble component) is a specified value or larger, with other conjugated diene rubber, wherein a difference of a glass transition temperature thereof and that of the above conjugated diene rubber is in a specific range; and completed the present invention.

Namely, according to the present invention, there is provided a silica-containing conjugated diene rubber composition comprising a conjugated diene rubber - silica mixture (A) containing at least 30 wt% of toluene insoluble components obtainable by co-coagulating an aqueous dispersion or solution of conjugated diene rubber (a) having a glass transition temperature of -120 to 0°C with an aqueous dispersion of silica, blended with a conjugated diene rubber (b) having a glass transition temperature such that the difference in absolute value between the glass transition temperature of rubber (b) and that of rubber (a) is 3 to 100 °C.

Preferably, in the silica-containing conjugated diene rubber composition according to the present invention, the conjugated diene rubber - silica mixture (A) contains 25 to 200 parts by weight of silica with respect to 100 parts by weight of conjugated diene rubber (a).

Preferably, in the silica-containing conjugated diene rubber composition according to the present invention, the amount of silica contained in the conjugated diene rubber -silica mixture (A) is 80 wt% or smaller with respect to the entire toluene insoluble components in the conjugated diene rubber -silica mixture (A).

Preferably, in the silica-containing conjugated diene rubber composition according to the present invention, the conjugated diene rubber -silica mixture (A) is obtainable by a step of being heated to 50 to 220°C after co-coagulation and before blending the conjugated diene rubber (b).

Preferably, in the silica-containing conjugated diene rubber composition according to the present invention, the glass transition temperature of the conjugated diene rubber (a) is -80 to -15°C.

Preferably, in the silica-containing conjugated diene rubber composition according to the present invention, the difference in absolute value between the glass transition temperature of conjugated diene rubber (b) and that of conjugated diene rubber (a) is 10 to 95°C.

Preferably, in the silica-containing conjugated diene rubber composition according to the present invention, wherein the conjugated diene rubber (a) comprises a rubber selected from natural rubber, styrene butadiene copolymer rubber and acrylonitrile butadiene copolymer rubber, and the conjugated diene rubber (b) comprises a rubber selected from natural rubber, styrene butadiene copolymer rubber, polybutadiene rubber and polyisoprene rubber.

Preferably, in the silica-containing conjugated diene rubber composition according to the present invention, the conjugated diene rubber (a) is a styrene butadiene copolymer rubber and the conjugated diene rubber (b) is a styrene butadiene copolymer rubber or polybutadiene rubber.

Preferably, in the silica-containing conjugated diene rubber composition according to the present invention, the conjugated diene rubber (b) contains 1 to 200 parts by weight of filler with respect to 100 parts by weight of the conjugated diene rubber (b).

Preferably, in the silica-containing conjugated diene rubber composition according to the present invention, the weight ratio of the conjugated diene rubber (a) to the conjugated diene rubber (b) is 95:5 to 5:95.

According to the present invention, there is provided a crosslinkable silica-containing conjugated diene rubber composition comprising the silica-containing conjugated diene rubber composition as set forth in any one of the above, and further a crosslinking agent.

According to the present invention, there is provided a molding made by molding and crosslinking the crosslinkable silica-containing conjugated diene rubber composition.

According to the present invention, there is provided a production method of a silica-containing conjugated diene rubber composition comprising:

a step of co-coagulating an aqueous dispersion or solution of the conjugated diene rubber (a) having a glass transition temperature of -120 to 0°C and an aqueous dispersion of silica to obtain a co-coagulated mass;

a step of heating the co-coagulated mass to 50 to 220°C to obtain a conjugated diene rubber - silica mixture (A) containing at least 30wt% of toluene insoluble components; and

a step of blending a conjugated diene rubber (b) with the conjugated diene rubber - silica mixture (A); said rubber (b) having a glass transition temperature such that the difference in absolute value between the glass transition temperature of rubber (b) and that of rubber (a) is 3 to 100°C.

According to the present invention, it is possible to provide a rubber composition having highly balanced fuel efficiency, wet grip performance, mechanical strength, wear resistance and low temperature brittleness resistance suitably used for tire tread, and a molding made by crosslinking the rubber composition.

BEST MODE FOR CARRYING OUT THE INVENTION

[Conjugated Diene Rubber - Silica Mixture (A)]

A conjugated diene rubber - silica mixture (A) used in the present invention is produced by co-coagulating aqueous dispersion or solution of conjugated diene rubber (a) and an aqueous dispersion of silica and includes at least 30 wt% of toluene insoluble components. When the toluene insoluble component is smaller than 30 wt%, it results in deterioration of mechanical strength, wear resistance, fuel efficiency and low temperature brittleness resistance of a silica-containing conjugated diene rubber composition to be obtained. Note that the toluene insoluble components are components not dissolved in toluene as a result of dissolving the conjugated diene rubber - silica mixture (A) in toluene at 23°C and includes conjugated diene rubber chemically bonded with silica (so-called bound rubber) and silica.

A content of toluene insoluble components in the conjugated diene rubber - silica mixture (A) is preferably 42 to 80 wt% and particularly preferably 45 to 70 wt%. When the content of toluene insoluble components in the mixture (A) is in the above ranges, a finally obtained silica-containing conjugated diene rubber composition becomes excellent in all of the fuel efficiency, wet grip performance, mechanical strength, wear resistance and low temperature brittleness resistance. Note that even if the content of the toluene insoluble components in the mixture (A) is in the above ranges, a silica-containing conjugated diene rubber composition obtained by dry mixing is not able to obtain sufficient effects on the characteristics explained above.

The conjugated diene rubber (a) to be used to obtain the mixture (A) has a glass transition temperature (Tg) of -120 to 0°C, preferably -80 to -15°C, and particularly preferably -60 to -25°C. Conjugated diene rubber having a too low Tg is hard to be produced, while when the Tg is too high, the fuel efficiency and low temperature brittleness resistance decline.

As silica to be used for obtaining the mixture (A), dry processed silica, wet processed silica, sol-gel silica and colloidal silica, etc. may be used. Wet processed silica is typified by precipitated silica obtained by neutralizing alkaline silicate with acid and gel processed silica, and precipitated silica containing much metal salt obtained by neutralizing by using a part of mineral acid or aluminum sulfate instead may be also used. In the present invention, it is preferable to use wet processed silica, particularly, precipitated silica having excellent rubber reinforcing property and productivity.

The silica preferably has a specific surface area ($S_{CTAB}$) measured by absorption of cetyltrimethylammonium bromide (CTAB) of 40 to 300 m$^2$/g, more preferably 50 to 280 m$^2$/g, and most preferably 60 to 260 m$^2$/g. Also, the silica preferably has a specific surface area ($S_{BET}$) measured by nitride absorption method (BET method) of 50 to 300 m$^2$/g, 60 to 280 m$^2$/g, and most preferably 70 to 260 m$^2$/g. Furthermore, a dibutyl phthalate oil absorption amount (hereinafter, simply referred to as an oil absorption amount) of the silica is preferably 100 to 400 ml/100g, 110 to 350 ml/100g, and most preferably 120 to 300 ml/100g.

In the present invention, when using silica having the above specific surface area and oil absorption amount, a silica-containing conjugated diene rubber composition to be obtained is more excellent in tensile strength, wear resistance and fuel efficiency, etc. These silica may be used alone or in combination of two or more.

The conjugated diene rubber - silica mixture (A) used in the present invention has a silica content of preferably 25 to 100 parts by weight, 30 to 150 parts by weight and particularly preferably 35 to 100 parts by weight with respect to 100 parts by weight of the conjugated diene rubber (a). When the silica content with respect to 100 parts by weight of the conjugated diene rubber (a) is too much, a silica-containing conjugated diene rubber composition to be obtained becomes too hard, so that kneading workability declines and mechanical strength and wear resistance may decline, while when too small, it becomes particularly difficult to improve the low temperature brittleness resistance.

The conjugated diene rubber - silica mixture (A) used in the present invention has a silica content of preferably 80 wt% or smaller, and more preferably 75 wt% or smaller with respect to entire toluene insoluble components in the conjugated diene rubber - silica mixture (A). When the silica amount contained in the conjugated diene rubber - silica mixture (A) is 80 wt% or smaller with respect to the entire toluene insoluble components, it is possible to obtain a silica-containing conjugated diene rubber composition being more excellent in fuel efficiency, wet grip performance and low temperature brittleness resistance.

In the present invention, it is preferable that a cationic substance is mixed in a mixed solution of an aqueous dispersion (or solution) of the conjugated diene rubber (a) and an aqueous dispersion of silica when obtaining the conjugated diene rubber - silica mixture (A). As a result of blending a cationic substance in the mixture solution, co-coagulation can be easily obtained and, toluene insoluble components (bound rubber) can be furthermore easily generated in the mixture (A).

Note that blending of the cationic substance may be performed on one or both of the aqueous dispersion (or solution) of the conjugated diene rubber (a) and aqueous dispersion of silica in advance, or performed on a mixture of the both.

A blending quantity of the cationic substance is preferably 0.1 to 10 parts by weight, more preferably 0.5 to 7.5 parts by weight, and furthermore preferably 1 to 6 parts by weight with respect to 100 parts by weight of silica included in the mixture. When the blending quantity of the cationic substance is too small, it is liable that a ratio of toluene insoluble components in the mixture (A) declines, while when too large, it becomes difficult to obtain the mixture (A) and deterioration of wear resistance of a composition to be obtained may be caused.

As a cationic substance, for example, cationic surfactant and cationic polymer may be mentioned.

As the cationic surfactant, stearylamine acetate and other alkylamine acetates; stearylamine hydrochloride and other alkylamine hydrochlorides; lauryl dimethylamine oxide and other alkylamine oxides; cetyltrimathylammonium chloride, lauryltrimethylammonium chloride, distearyl dimethylammonium chloride and other alkyl ammonium halides; alkylbenzyl dimethylammonium chloride and other alkylarylammonium halides; and stearyl betaine and other alkyl betains, etc. may be mentioned.

Also, as the cationic polymer, a polymer which electrolyzed to be cationic when dissolved in water is used without any restriction. For example, those obtained by polymerizing monomers having the primary to tertiary amino group and ammonium base thereof and the quaternary ammonium base are preferably used. Furthermore, those obtained by copolymerizing with other monomer in a range of not hindering the effects explained above may be also used.

To raise specific examples of preferable cationic polymers, polymers having polyethyreneimine, polyvinylamine, polyvinyl pyridine, polyamine sulfone, polyarrylamine, polydiarrylmethylamine, polyamideamine, polyaminoalkyl acrylate, polyaminoalkyl methacrylate, polyaminoalkyl acrylamide, polyepoxyamine, polyamide polyamine, polyester polyamine, dicyan diamide formalin condensate, polyalkylene polyamine dicyan diamide condensate and other epichlorohydrin dialkylamine condensate, and ammonium salt thereof, furthermore, polydiaryldimethyl ammonium chloride, polymethacrylate ester methylchloride and other quaternary ammonium base may be mentioned.

Weight-average molecular weight of the cationic polymer is preferably 1,000 to 1,000,000, more preferably 2,000 to 900,000, and most preferably 3,000 to 800,000. When the weight-average molecular weight is 1,000 or larger, tensile strength and wear resistance, etc. of vulcanized rubber improve. Also, when the weight-average molecular weight is 1,000,000 or smaller, silica dispersion in the rubber becomes preferable. Also, a value of cation equivalent molecular weight calculated by colloid titration of the cationic polymer is preferably 250 or smaller, more preferably 220 or smaller, and most preferably 200 or smaller. As cationic substance used in the present invention, a cationic polymer is particularly preferably used in the point that vulcanization productivity of the rubber composition is high and tensile strength and wear resistance of vulcanized rubber obtained by vulcanization are excellent. The cationic surfactants and cationic polymers may be used alone or in combination of two or more kinds.

In the present invention, it is preferable that a silane coupling agent is furthermore blended in the conjugated diene rubber - silica mixture (A). By blending a silane coupling agent in the mixture (A), low temperature brittleness resistance, wet grip performance, fuel efficiency and wear resistance of the composition are furthermore improved.

A blending quantity of the silane coupling agent in the mixture (A) is preferably 0.1 to 20 parts by weight, more preferably 0.5 to 15 parts by weight, and most preferably 1 to 10 parts by weight with respect to 100 parts by weight of silica included in the mixture (A). When the blending quantity of the silica coupling agent is too small, it is liable that mechanical strength and wear resistance of a rubber composition to be obtained deteriorate, and even when too much, the improving effects of the present invention are not changed.

As the silane coupling agent, for example, vinyltriethoxy silane, β-(3,4-epoxycyclohexyl)ethyltrimethoxy silane, N-(β-aminoethyl)-γ-aminopropyl trimethoxy silane, 3-octathio-1-propyltriethoxy silane, bis(3-(triethoxy silyl)propyl)tetra sulfide, bis(3-(triethoxysilyl)propyl)disulfide, γ-trimethoxysilyl propyldimethylthio carbamyl tetrasulfide, and γ-trimethoxysilylpropyl benzothiazyl tetrasulfide, etc. may be mentioned. It is preferable that sulfur included in one atom is four or less in the silane coupling agent so as to prevent scorching at the time of kneading. These silane coupling agents may be used alone or in combination of two or more kinds.

In the present invention, a silylation agent may be furthermore blended in the conjugated diene rubber - silica mixture (A). By blending a silylation agent, fuel efficiency and wear resistance of the composition are furthermore improved. As the silylation agent, for example, phenyltrichlorosilane, diphenyl dichlorosilane, trimethyl chlorosilane, tert-butyldimethyl chlorosilane and other chlorosilane compounds; phenyltrimethoxy silane, phenyltriethoxy silane, isobutyl trimethoxy silane, diphenyl dimethoxy silane, vinyltris(β-methoxy)silane, γ-aminopropyl triethoxy silane, γ-mercaptopropyl trimethoxy silane and other alkoxy silane compounds; hexamethyl disilazane and other silazane compounds; N-trimethylsilyl acetoamide, N,N-(bistrimethylsilyl)acetoamide and other acetoamides; and N,N-(bistrimethylsilyl)urea and other ureas; etc. may be mentioned. These silylation agents may be used alone or in combination of any two or more kinds. Among the silylation agents, particularly, chlorosilane compounds, alkoxysilane compounds and silazane compounds are preferably used.

A blending quantity of the silylation agent with respect to 100 parts by weight of silica in the mixture (A) is preferably 0.1 to 20 parts by weight, more preferably 0.5 to 15 parts by weight, and most preferably 1 to 10 parts by weight.

The silane coupling agent and silylation agent may be blended either before or after a step of co-coagulating the conjugated diene rubber (a) and silica, or before or after a dehydrating step of the obtained co-coagulated substance. Specifically, a method of blending in aqueous dispersion of silica in advance, a method of blending in aqueous dispersion (or solution) of the conjugated diene rubber (a), a method of blending at the time of co-coagulation, a method of blending at the time of dehydrating the co-coagulated substance, and a method of blending in rubber crumbs after dehydration, etc. may be mentioned. Alternately, they may be mixed in all steps by divided in small portions.

To add accurately, it is preferable to add to aqueous dispersion (or solution) of the conjugated diene rubber (a) or in aqueous dispersion of silica in advance before co-coagulation. Also, to furthermore improve fuel efficiency and wear resistance of the composition to be obtained, it is particularly preferably added to aqueous dispersion of silica before adding a cationic substance. Also, a mixing temperature at the time of mixing the silane coupling agent and silylation agent with aqueous dispersion of silica is normally 10 to 100°C, preferably 40 to 90°C, and more preferably 60 to 80°C, and the mixing time is normally 0.1 to 180 minutes, preferably 0.5 to 150 minutes, and more preferably 1 to 120 minutes.

In the present invention, organopolysiloxane or polyether based polymer may be added to the conjugated diene rubber - silica mixture (A). By adding organopolysiloxane or polyether based polymer, fuel efficiency and wear resistance of the composition to be obtained are furthermore improved. As organopolysiloxane, those having a polymerization degree of 3 to 10,000 are preferable and a methoxy group, hydroxyl group, amino group, alkoxy group, epoxy group, carbonyl group, sulfide group, sulphonyl group, nitrile group or other functional group is preferably included. Also, a polyether based polymer is a polymer having ether bonds in its main chain and, for example, a polymer of alkylene oxide, epihalohydrin, unsaturated epoxide or other oxysilane compound, and those having molecular weight of 100 to 10,000,000 are preferable. They may be used alone or in combination of two or more kinds.

Also, adding quantities of these are not particularly limited, but a range of 0.1 to 50 parts by weight with respect to 100 parts by weight of silica in the mixture (A) is preferable. The adding method is not particularly limited and they may be blended either before or after a step of co-coagulating the conjugated diene rubber (a) and silica, or before or after a dehydrating step of the obtained co-coagulated substance. Specifically, a method of blending in aqueous dispersion of silica in advance, a method of blending in aqueous dispersion (or solution) of the conjugated diene rubber (a), a method of blending at the time of co-coagulation, a method of blending at the time of dehydrating the co-coagulated substance, and a method of blending in rubber crumbs after dehydration, etc. may be mentioned. Alternately, they may be mixed in all steps by divided in small portions. To add accurately, it is preferable to add to aqueous dispersion (or solution) of the conjugated diene rubber (a) or in aqueous dispersion of silica in advance before co-coagulation.

As a method of producing the conjugated diene rubber - silica mixture (A) used in the present invention, a method of mixing aqueous dispersion or solution of the conjugated diene rubber (a), aqueous dispersion of silica and, furthermore, a cationic substance and silane coupling agent, etc. in accordance with need and co-coagulating the conjugated diene rubber with silica may be applied.

As aqueous dispersion or solution of the conjugated diene rubber (a), it is preferable to use aqueous dispersion or solution (preferably, aqueous dispersion) of the conjugated diene rubber (a) after polymerization thereof and before being dried so as to disperse silica well in the mixture (A). Furthermore, to evenly coagulate after mixing, it is more preferable to use as aqueous dispersion of the conjugated diene rubber (a), emulsified liquid or suspension liquid of the conjugated diene based rubber (a).

Concentration of the conjugated diene rubber (a) in the aqueous dispersion or solution is not particularly limited and may be suitably set in accordance with the use object and in a range of normally 1 to 80 wt%, preferably 3 to 55 wt%, and particularly preferably 5 to 30 wt%. When being in the ranges, controllability of co-coagulation is preferable.

In the present invention, to disperse silica evenly in the rubber composition, silica is used in a form of aqueous dispersion. Particularly, to balance accuracy of controlling of a specific surface area and oil absorption, etc. in silica production and high dispersibility of silica, it is more preferable to use aqueous suspension (suspension of silica) wherein silica cakes after being combined by the wet method and washed and before being dried.

An average particle diameter of silica in the aqueous dispersion is not particularly limited and may be suitably determined in consideration of the use object. Generally, a preferably used range is 0.05 to 50 $\mu$m. When the average particle diameter is 0.05 $\mu$m or larger, dispersion defective due to self aggregability of silica can be prevented, and hardness of the rubber composition to be obtained becomes preferable. On the other hand, when the average particle diameter is 50 $\mu$m or smaller, silica dispersion in the rubber becomes preferable and sufficient mechanical strength and fuel efficiency can be obtained. Specially, when used for tire tread, the average particle diameter of silica is preferably 0.1 to 40 $\mu$m, and more preferably 1 to 30 $\mu$m.

Adjustment of particle diameter of silica may be performed at any step as far as it is before co-coagulation, and a well known method without any restriction may be used for the adjustment. It may be, for example, attained by dry pulverizing method and wet pulverizing method. Also, when adjusting a particle diameter by the wet pulverizing method, adjustment can be attained in water, an organic solvent, aqueous dispersion or solution of the conjugated diene rubber (a), or in a mixed solution of these.

As to concentration of silica in aqueous dispersion, those with 1 to 40 wt% are normally preferably used. When in this range, fluidity of the aqueous dispersion of silica becomes good, controllability of co-coagulation is good, and a uniform rubber composition can be obtained.

A method of co-coagulating is not at all limited as far as it is a method of obtaining a co-coagulated substance, which is conjugated diene rubber (a) uniformly impregnated with silica, and well known techniques can be applied. For example, a method of improving affinity with the conjugated diene rubber (a) by processing silica with a cationic substance, silane coupling agent or silylation agent and co-coagulating silica with the conjugated diene rubber (a) may be mentioned. Specially, use of a cationic substance is more preferable for being able to obtain with good yield and productivity.

Also, a pH of the mixed liquid in co-coagulation is preferably 3.5 to 8.0. When an adding quantity of aqueous dispersion of the conjugated diene rubber (a) is excessive, the pH rises, so that the pH is preferably adjusted by adding acid.

Note that in the method of co-coagulating the conjugated diene rubber (a) with silica by mixing aqueous dispersion or solution of the conjugated diene rubber (a) and aqueous dispersion of silica, sulfuric acid, phosphoric acid, hydrochloric acid and other inorganic acid; formic acid, acetic acid, butyric acid and other organic acid; aluminum sulfate, sodium chloride, calcium chloride and other salt may be used to complete coagulation of rubber.

When blending extension oil in the mixture (A), it is preferable to add into the system before co-coagulation starts, and it is more preferable to mix it in aqueous dispersion or solution of the conjugated diene rubber (a) in advance.

Co-coagulation is performed preferably at 10°C to 90°C, and more preferably 20°C to 80°C. A method of co-coagulation is not particularly limited and, generally, a method of agitating the mixed liquid by using a general dispersing device, such as propeller, disper, homogenizer.

Respective steps of filtering, washing with water, dehydrating and drying, etc. of the co-coagulated substance with silica dispersed therein obtained by the above method are not particularly limited, and generally used method may be suitably used. A method of separating solidified products (hereinafter, referred to as crumbs) of rubber and silica generated by co-coagulation from liquid components (hereinafter, referred to as serum), washing the obtained crumbs with water, filtering, then, dehydrating by removing water by screen, centrifugation, decanting, filter press and squeezer, etc., drying by an extruding dryer, hot-air dryer and indirect heating container having agitating blades, etc. and molding into grains, pellets, sheets or blocks may be applied. Also, crumbs can be molded to powder by spray drying without separating the crumbs and the serum.

In the present invention, it is preferable to obtain the conjugated diene rubber - silica mixture (A) through a step of heating the co-coagulated substance after the above co-coagulation. By heating the co-coagulated substance, control of toluene insoluble amount in the obtained mixture (A) and a ratio of silica in the toluene insoluble component becomes easy.

A heating temperature of the co-coagulated substance is preferably 50 to 220°C, more preferably 70 to 200°C, and particularly preferably 90 to 180°C. When the heating temperature is too low, the effects of heating are not obtained effectively, while when too high, the mixture (A) tends to deteriorate. The heating time is normally 5 seconds to 720 minutes or so, preferably 30 seconds to 120 minutes or so. One minute to 30 minutes or so is particularly preferable.

Heating may be performed, for example, by a method of heating drying the crumbs obtained by co-coagulation (a co-coagulated substance) and a method of heating kneading the crumbs obtained by co-coagulation (a co-coagulated substance). Heating may be performed at any timing of dehydrating the co-coagulated substance, drying, and drying kneading with other later explained compounding agents, etc. When the heating step is performed in a state that the co-coagulated substance includes a silane coupling agent, the conjugated diene rubber (a) firmly bonds with silica via the silane coupling agent, so that it is more effective.

In the present invention, a filler or compounding agents other than silica to be co-coagulated with the conjugated diene rubber (a) may be suitably blended when producing the mixture (A). As the filler and compounding agents here, for example, antioxidant, activator, and plasticizer, etc. may be mentioned other than carbon black, a carbon-silica dual phase filler, wherein silica is carried on surfaces of carbon black, talc, calcium carbonate, clay, aluminum hydroxide.

A total amount (including silica to be co-coagulated with the conjugated diene rubber (a)) of a filler in the silica-containing conjugated diene rubber composition of the present invention is preferably 20 to 200 parts by weight, and more preferably 30 to 150 parts by weight with respect to 100 parts by weight as a total of the conjugated diene rubbers (a) and (b).

As carbon black, for example, furnace black, acetylene black, thermal black, channel black and graphite, etc. may be used. Among them, furnace black is particularly preferable, and those at a grade of SAF, ISAF, ISAF-HS, ISAF-LS, IISAF-HS, HAF, HAF-HS, HAF-LS and FEF, etc. may be mentioned as the specific examples. The carbon black may be used alone or in combination of two or more kinds.

As an activator, diethylene glycol, polyethylene glycol, and silicone oil, etc. may be mentioned.

[Conjugated Diene Rubber (b)]

The silica-containing conjugated diene rubber composition of the present invention is formed by blending the conjugated diene rubber (b) in the conjugated diene rubber - silica mixture (A) explained above.

The conjugated diene rubber (b) used in the present invention is those having a glass transition temperature such that the difference in absolute value between the glass transition temperature (Tg) of rubber (b) and that of rubber (a) is 3 to 100°C, preferably 10 to 95°C, and particularly preferably 20 to 90°C. By using conjugated diene rubber (b) having a Tg in such ranges, it is possible to obtain a composition having highly balanced wet grip performance, wear resistance and low temperature brittleness resistance. When the absolute value of the Tg difference is too small, the effects by blending the conjugated diene rubber (b) cannot be obtained, while when the absolute value is too large, fuel efficiency and low temperature brittleness of the composition to be obtained deteriorate.

The Tg of the conjugated diene rubber (b) is preferably -120 to 40°C, more preferably -110 to 35°C, and particularly preferably -100 to 30°C.

The conjugated diene rubber (b) may be blended with filler as far as not hindering the effects of the present invention. The filler is not particularly limited and silica, aluminum hydroxide and other metal oxides, carbon black, carbon-silica dual phase filler, calcium carbonate, talc, clay and cornstarch, etc. may be mentioned.

A compounding amount of the filler to be blended in the conjugated diene rubber (b) is preferably 1 to 200 parts by weight, more preferably 30 to 150 parts by weight, and particularly preferably 40 to 100 parts by weight with respect to 100 parts by weight of the conjugated diene rubber (b). When the blending quantity of the filler is too much, dispersion of the filler becomes difficult and it is liable that fuel efficiency, wear resistance and mechanical strength, etc. of the composition to be obtained decline. A method of blending filler in the conjugated diene rubber (b) may be either of dry mixing or wet mixing.

When blending the filler, it is preferable that the conjugated diene rubber (b) is what deformed by a functional group having high affinity with the filler. As such functional group, a hydroxyl group, amino group, epoxy group, alkoxysilyl group and tin-containing group, etc. may be mentioned. As a method of introducing the functional group by deforming the conjugated diene rubber (b), for example, methods described in the International Patent Publication No. WO96/16118, The Japanese Unexamined Patent Publication Nos. 9-235323 and 2002-284814 may be used.

Also, the conjugated diene rubber (b) may include a silane coupling agent and other compounding agents.

As the conjugated diene rubbers (a) and (b), natural rubber, polyisoprene rubber, polybutadiene rubber, styrene butadiene copolymer rubber, acrilonitrile butadiene copolymer rubber, styrene butadiene isoprene copolymer rubber, butadiene isoprene copolymer rubber, acrylonitrile styrene butadiene copolymer rubber, styrene isoprene copolymer rubber and polystyrene-polybutadiene-polystyrene block copolymer, etc. may be mentioned. Among them, as the conjugated diene rubber (a), those including any of natural rubber, styrene butadiene copolymer rubber and acrylonitrile butadiene copolymer rubber are preferable, and those including styrene butadiene copolymer rubber are more preferable, and styrene butadiene copolymer rubber is furthermore preferable. As the conjugated diene rubber (b), those including any of natural rubber, styrene butadiene copolymer rubber, polybutadiene rubber and polyisoprene rubber are preferable, those including at least one of styrene butadiene copolymer rubber and polyisoprene rubber are more preferable, and styrene butadiene copolymer rubber or polybutadiene rubber are furthermore preferable.

These conjugated diene rubbers (a) and (b) may include a hydroxyl group, carboxyl group, alkoxysilyl group, amino group and epoxy group, etc.

The Mooney's viscosity ($ML_{1+4}$, 100°C) of the conjugated diene rubbers (a) and (b) is in a range of 10 to 200, and preferably 30 to 150.

A bound styrene amount of styrene copolymer diene rubber included in styrene butadiene copolymer rubber, styrene butadiene isoprene copolymer rubber and acrylonitrile styrene butadiene copolymer rubber, etc. is 1 to 55 wt%, preferably 5 to 50 wt%, and more preferably 20 to 45 wt%. When the styrene amount is too much, the low temperature brittleness resistance, fuel efficiency and wear resistance tend to deteriorate. The conjugated diene rubbers (a) and (b) may be used alone or in combination of two or more kinds. When combining two or more kinds of the conjugated diene rubbers (a) and (b) to use, the difference in absolute value between the glass transition temperature of each of the conjugated diene rubber (b) from that of each of the conjugated diene rubber (a) has to be 3 to 100°C.

Note that the silica-containing conjugated diene rubber composition of the present invention may be blended with other conjugated diene rubber having an absolute value of a difference of the glass transition temperature from that of the conjugated diene rubber (a) in a range of not hindering the effects of the present invention. In that case, a compounding amount of such conjugated diene rubber in a total weight of the conjugated diene rubbers is preferably 20 wt% or smaller, more preferably 10 wt% or smaller, and particularly preferably 5 wt% or smaller. When it is out of these ranges, it becomes difficult to obtain the aimed effects.

In the present invention, extension oil may be mixed in the conjugated diene rubber. As the extension oil, those normally used in the rubber industry may be used, and paraffin base, aromatic base, naphthene base petroleum softener, vegetable softener and fatty acids, etc. may be mentioned. In the case of petroleum softener, a content of polycyclic aromatic is preferably less than 3%. The content is measured by the method of IP346 (a test method of The Institute Petroleum of the Great Britain). When performing oil extension, the quantity with respect to 100 parts by weight as a total of the conjugated diene rubber is normally 5 to 100 parts by weight, preferably 10 to 60 parts by weight, and particularly preferably 20 to 50 parts by weight.

A ratio of the conjugated diene rubber (b) to be blended in the mixture (A) is adjusted, so that a weight ratio of the conjugated diene rubber (a) and the conjugated diene rubber (b) in the mixture (A) becomes preferably 95:5 to 5: 95, more preferably 90:10 to 10:90, and particularly preferably 80:20 to 20:80. When either one of the weight ratio of the rubber (a) and the rubber (b) is too small, effects of the present invention may not be able to be obtained.

A blending method of the mixture (A) and the conjugated diene rubber (b) is not particularly limited and a well known method of mixing with a Bumbary mixer, kneader and extruding mixer is used.

The crosslinkable silica-containing conjugated diene rubber composition of the present invention is formed by furthermore blending a crosslinking agent in the silica-containing conjugated diene rubber composition.

As the crosslinking agent, for example, sulfur, halogenated sulfur, organic peroxide, organic polyvalent amine compound, an alkylphenol resin having a methylol group, etc. may be mentioned. Among them, sulfur is preferable. These crosslinking agents may be used alone or in combination of two or more kinds. A blending quantity of the crosslinking agent with respect to 100 parts by weight of rubber components is preferably 0.3 to 10 parts by weight, and more preferably 0.5 to 5 parts by weight.

A crosslinking accelerating agent, a crosslinking activator, a scorch retarder, etc. may be included respectively in necessary amounts in the crosslinkable silica-containing conjugated diene rubber composition of the present invention based on a normal method.

As a crosslinking accelerator, N-cyclohexyl-2-benzothiazol sulfenamide, N-t-butyl-2-benzothiazol sulfenamide and other sulfenamide crosslinking accelerator; diphenylguanidine and other guanidine crosslinking accelerator; thiourea crosslinking accelerator, thiazol crosslinking accelerator, thiuram crosslinking accelerator, dithiocarbamic acid crosslinking accelerator, xanthogenic acid crosslinking accelerator and other crosslinking accelerator may be mentioned. These crosslinking accelerators may be used alone or in combination of two or more kinds, but those including sulfonamide crosslinking accelerator are preferable. A blending quantity of the crosslinking accelerator with respect to 100 parts by weight of the rubber component is preferably 0.3 to 10 parts by weight, and more preferably 0.5 to 5 parts by weight.

As a crosslinking activator, for example, stearic acid and other higher fatty acid, activated zinc oxide, zinc oxide and other zinc oxide may be used. These crosslinking activator may be used alone or in combination of two or more kinds. A blending ratio of the crosslinking activator is suitably selected in accordance with kinds of the crosslinking activators.

When blending the compounding agents explained above in the silica-containing conjugated diene rubber composition of the present invention, the respective components are kneaded based on a normal method. For example, after kneading compound agents except for crosslinking agents and crosslinking accelerators, a silica-filled rubber composition and, in accordance with need, other rubber and reinforcing agent, the kneaded substance is kneaded with crosslinking agents and crosslinking accelerators, so that a rubber composition can be obtained. A kneading temperature of kneading compounding agents except for the crosslinking agents and crosslinking accelerators with the silica-filled rubber composition is preferably 20 to 200°C, more preferably 80 to 190°C, and particularly preferably 120 to 180°C. Next, after cooling the obtained kneaded substance preferably to 100°C or lower, more preferably 80°C or lower, the result is kneaded with the crosslinking agents and crosslinking accelerators.

A molding of the present invention is made by molding and crosslinking the crosslinkable silica-containing conjugated diene rubber composition.

The crosslinking method is not particularly limited and may be selected in accordance with a property of the composition and size of the molding to be obtained, etc. By filling up the crosslinking rubber composition in a molding and heating, crosslinking may be performed at a time with molding, or crosslinking may be performed by heating an already molded crosslinking rubber composition. The crosslinking temperature is preferably 120 to 200°C, more preferably 100 to 190°C, and most preferably 120 to 180°C.

A molding of the present invention is used for a variety of use objects utilizing the characteristics, for example, tread, under tread, carcass, sidewall, bead part and other tire parts; a hose, window frame, belt, shoe sole, vibration absorbing rubber, automobile parts, seismic isolation rubber and other rubber parts; impact-resistant polystyrene, ABS resin and other resin reinforcing rubber parts; etc. Among them, it is preferable as tire parts and particularly preferable as a tire tread of fuel efficient tire.

EXAMPLES

To explain the present invention further in detail, examples and comparative examples will be taken for explanations below, but the present invention is not limited to these examples. Note that "part" and "%" are based on weight unless otherwise mentioned. Various properties in the examples and comparative examples were measured by the methods below.

(1) Average Particle Diameter of Silica
A volume-based median diameter was measured by using a light scattering method particle size distribution measuring device (Coulter Ls-230 made by Coulter Inc.) and the value was used as the average particle diameter.

(2) Specific Surface Area

a) Measurement of Specific Surface Area ($S_{CTAB}$) by Adsorption of Cetyltrimethylammonium Bromide (CTAB)
After placing silica wet cakes in a dryer (120°C) to dry, measurement was made based on the method described in the ASTM D3765-92. Note that the method described in the ASTM D3765-92 is a method for measuring SCTAB of carbon black, so that a little improved method was used. Namely, a CTAB standard solution is separately fabricated without using ITRB (83.0 $m^2/g$) as a sample of carbon black, orientation of an aerosol OT solution is performed, and a specific surface area was calculated from an absorption amount of CTAB by assuming that an absorption sectional area per a CTAB1 atom with respect to a silica surface is 35 square Angstrom. This is because since surface conditions differ between carbon black and silica, an absorption amount of CTAB differs even in the case of the same specific surface area.

b) Measuring of Specific Surface Area ($S_{BET}$) by Nitride Absorption Method
After placing silica wet cakes in a dryer (120°C) to dry, ASAP 2010 made by Micromeritics Instrument Corporation was used, and the nitride absorption amount was measured, and the value of one-point method at a relative pressure of 0.2 was applied.

(3) Oil Absorption Amount
It was obtained by JIS K6220.

(4) Bound Styrene Amount in Copolymer
It was measured based on JIS K6383 (refractive index method).

(5) Mooney's Viscosity ($ML_{1+4}$, 100°C)
It was measured based on JIS K6300.

(6) Glass Transition Temperature
A differential scanning calorimeter (DSC made by PerkinElmer Inc.) was used to measure a differential scanning calorimetry by raising the temperature from - 150°C to +150°C at a temperature raising rate of 10°C/min. in a nitrogen atmosphere, and an obtained endothermic curve was differentiated to obtain an inflection point. The inflection point was used as the glass transition temperature.

(7) Silica Content
By using a thermal analyzer TG/DTA (TG/DTA320 made by SII NamoTechnology Inc.), a residue rate after thermal decomposition of a dried sample in the air and a weight reduction rate up to 150°C were measured, and calculation was conducted by using the formula below. In examples, it is described in terms of an amount (parts by weight) with respect to 100 parts by weight of rubber. The measuring condition was a temperature raising rate of 20°C/min., a reaching temperature of 600°C and a holding time at 600°C for 20 minutes.

$$\texttt{Silica Content (\%) = Combustion Residue Rate /}$$

$$\texttt{[100-(Weight Reduction Rate up to 150°C)]×100}$$

(8) Toluene Insoluble Component
A dried sample in an amount of 0.2g was cut to be a size of 2 mm square or so, put in a basket formed by stainless wire mesh of 280-mesh (having apertures of 53pm), immersed in 60 ml of toluene and left still at 23°C for 72 hours. After 72 hours, the basket was taken out, washed with acetone, vacuum dried at 40°C for 12 hours and weighed to obtain toluene insoluble components.

(9) Wet Grip Performance
An RDA-II made by Rheometrics was used to measure tan$\delta$ at 0°C under a condition of torsion of 0.5% and 20Hz. The characteristic was indicated by an index. The larger the index is, the more excellent the wet grip performance is.

(10) Fuel Efficiency
An RDA-II made by Rheometrics was used to measure tanδ at 60°C under a condition of torsion of 4.0% and 1Hz. The characteristic was indicated by an index. The smaller the index is, the more excellent the fuel efficiency is (low calorific property).

(11) Wear Resistance
It was measured by using a Lambourn abrasion tester based on JIS K6264. The characteristic was indicated by an index (abrasion resistance index). The larger the value is, the more excellent the wear resistance is.

(12) Tensile Strength
A tensile test was conducted based on JIS K6301 to measure a stress at 300% elongation. The characteristic was indicated by an index. The larger the index is, the more excellent the tensile strength characteristic is.

(13) Brittleness Temperature
A low temperature impact brittleness test was conducted based on JIS K6261. The characteristic was indicated by a difference of an impact brittleness temperature from that of a reference sample. The larger the value is in the negative range, the more excellent the low temperature performance (low temperature brittleness resistance) is.

[Aqueous Dispersion of Conjugated Diene Rubber (a)]

(Production of SBR latex (R1))

200 parts of deionized water, 1.5 parts of rosin acid soap, 2.1 parts of fatty acid soap, 72 parts of 1,3-butadiene and 28 parts of styrene as a monomer, and 0.12 part of t-dodecyl mercaptan were put in a pressure-resistant reactor provided with a mixer. A temperature of the reactor was set to 10°C, and 0.1 part of diisopropylbenzen hydroperoxide and 0.06 part of sodium formaldehyde sulfoxylate were added as polymerization initiators to the reactor. Furthermore, 0.014 part of ethylenediamine tetraacetate and 0.02 part of ferric sulfate were added to the reactor to start polymerization.
At a point that the polymerization inversion rate reaches 45%, 0.05 part of t-dodecyl mercaptan was added to make the reaction continue.
At a point that the polymerization inversion rate reaches 70%, 0.05 part of diethylhydroxylamine was added to stop the reaction.
After removing an unreacted monomer by steam distillation, 0.21 part of N-(1,3-dimethylbutyl)-N'-phenyl-p-phenirenediamine and 0.14 part of 2,2,4-trimethyl-1,2-dihydroquinoline as antioxidants were added in a 60% emulsified aqueous solution, and aqueous dispersion of styrene butadiene copolymer rubber (SBR latex (R1)) having a solid concentration of 24% was obtained.
Here, a part of R1 was taken out, Enerthene 1849A (made by British Petroleum) was made to 66% emulsified aqueous solution (hereinafter, referred to as oil emulsion) by fatty acid soap and added in an amount of 37.5 parts with respect to 100 parts of SBR in the R1. After that, the SBR latex (R1) including the extension oil was coagulated at 60°C by sodium chloride while adjusted to have a pH of 3 to 5 by sulfuric acid, so that SBR in crumbs was obtained. The obtained crumbs were dried by a hot air dryer at 80°C and solid rubber (SBR1) was obtained. A bound styrene amount of the obtained SBR1 was 23.5%, the glass transition temperature was -50°C, and the Mooney's viscosity was 49.

(Production of SBR Latex (R2))

Respective quantities were changed to 0.20 part of t-dodecyl mercaptan, 0.03 part of diisopropylbenzen hydroxyperoxide and 0.04 part of sodium formaldehyde sulfoxylate as polymerization initiators, 0.01 part of ethylene diamine tetraacetate and 0.03 part of ferric sulfate. As antioxidants, 0.8 part of octadecyl-3-(3,5-di-t-butyl-4-hydroxyphenyl)propionate and 0.12 part of 2,4-bis(n-octylthiomethyl)-6-methylphenol were added in a state of 30% emulsified aqueous solution, so that SBR latex (R2) having solid concentration of 24% was obtained. Here, a part of the R2 was taken out and adjusted to have a pH of 3 to 5 by sulfuric acid without adding any extension oil. Other than the above, solid rubber (SBR2) was obtained in the same way as in the section of production of the R1 above. A bound styrene amount of the obtained SBR2 was 23.6%, the glass transition temperature was -50°C, and the Mooney's viscosity was 52.

(Production of SBR Latex (R3))

Other than changing to 57.5 parts of 1,3-butadiene and 42.5 parts of styrene, which were put in at starting polymerization, SBR latex (R3) having solid concentration of 24% and solid rubber (SBR3) were obtained in the same way as in producing the SBR latex (R1). Note that a bound styrene amount of the SBR3 was 35.0%, the glass transition temperature was -40°C, and the Mooney's viscosity was 49.

[Reference Production Example]

(Production of Polybutadiene Rubber (BR1))

5000 parts of cyclohexane, 800 parts of 1,3-butadiene and 4.5 millimoles of tetramethylethyrenediamine were put in an autoclave provided with a mixer and, after bringing to 40°C, 7 millimoles of n-butyl lithium was added to start polymerization. After confirming that the polymerization inversion rate reached 100%, 0.5 millimole of tetramethoxy silane was added to react for 30 minutes, then, methanol was added to stop the polymerization. The highest reached temperature at the polymerization was 60°C. Next, to the polymerization reaction solution after stopping the polymerization, 0.12 part of 2,4-bis(n-octylthiomethyl)-6-methylphenol was added with respect to 100 parts of rubber component, and coagulation was performed by the steam distillation method, so that crumbs were obtained. The obtained crumbs were dried by a hot air dryer at 80°C and solid polybutadiene rubber (BR1) was obtained. The obtained BR1 had a vinyl bonding amount of 68%, the glass transition temperature of -41°C, and the Mooney's viscosity was 42.

[Aqueous Dispersion of Silica]

(Production of Aqueous Suspension of Silica (S1))

In a $1m^3$ stainless reactor provided with a temperature adjuster, 230 litters of sodium silicate aqueous solution ($SiO_2$ concentration was 10 g/litter, and a mole ratio of $SiO_2/Na_2O$ was 3.41) was put and the temperature was brought to 85°C. Next, 73 litters of 22% sulfuric acid and 440 litters of sodium silicate aqueous solution ($SiO_2$ concentration was 90 g/litter, and a mole ratio of $SiO_2/Na_2O$ was 3.41) were put therein at a time by taking 120 minutes. After ripening for 10 minutes, 16 litters of 22% sulfuric acid was added by taking 15 minutes. Reaction proceeded by keeping the reaction solution temperature at 85°C, while always agitating the reaction solution and, finally, silica slurry of the reaction solution having a pH of 3.2 was obtained.

The obtained silica slurry was washed with water and filtered with a filter press, and silica wet cake (SK1) having a silica solid component of 23% was obtained. Here, a part of the obtained silica wet cake was dried and silica powder (sk1) was obtained. A BET specific surface area ($S_{BET}$), a CTAB specific surface area ($S_{CTAB}$), oil absorption and percentage of water content of the silica powder (sk1) were measured. As the results, the BET specific surface area ($S_{BET}$) was 201 $m^2/g$, the CTAB specific surface area ($S_{CTAB}$) was 190 $m^2/g$, the oil absorption amount was 210 ml/ 100g, and the percentage of water content was 7.1%.

The obtained silica wet cake (SK1) and pure water were mixed by pulverizing the silica wet cake by using a homogenizer, so that silica solid concentration in the aqueous suspension liquid becomes 15%, then, a cationic substance (polydiarylmethylammonium chloride having weight-average molecular weight of 20000 and cation equivalent molecular weight of 148) was mixed in an amount of 3 parts with respect to 100 parts of the silica solid component, so that silica aqueous suspension (S1) including the cationic substance was obtained. A particle diameter of silica in the aqueous suspension (S1) was 15 $\mu$m.

(Production of Aqueous Suspension (S2) of Silica)

Sodium silicate aqueous solution (same components as those in the production of the S1) in an amount of 150 litters was put in and the temperature was raised to 95°C. Next, 78 litters of 22% sulfuric acid and 461 litters of sodium silicate aqueous solution (same components as those in the production of the S1) were put in at a time by taking 190 minutes. After ripening for 10 minutes, 15 litters of 22% sulfuric acid was added by taking 15 minutes. The reaction proceeded by keeping the reaction temperature at 95°C while always agitating the reaction solution, so that silica slurry of the reaction solution having a pH of 3.1 was finally obtained.

The obtained silica slurry was filtered and washed with water by a filter press, and silica wet cake (SK2) having a silica solid component of 27% was obtained. Here, a part of the obtained silica wet cake (SK2) was dried and silica powder (sk2) was obtained. A BET specific surface area ($S_{BET}$), a CTAB specific surface area ($S_{CTAB}$), oil absorption and percentage of water content of the silica powder (sk2) were measured. As the results, the BET specific surface area ($S_{BET}$) was 100 $m^2/g$, the CTAB specific surface area ($S_{CTAB}$) was 93 $m^2/g$, the oil absorption amount was 165 ml/ 100g, and the percentage of water content was 4.5%.

The obtained silica wet cake (SK2) and pure water were mixed by pulverizing the silica wet cake by using a homogenizer, so that silica solid concentration in the aqueous suspension liquid becomes 15%, then, a cationic substance (polydicyandiamide ammonium chloride formaldehyde poly condensation having cation equivalent molecular weight of 198) was mixed in an amount of 6 parts with respect to 100 parts of the silica solid component. The obtained silica wet cake (SK2) and pure water were processed in the same way as in the production of the S1 explained above, so that silica aqueous suspension (S2) including the cationic substance was obtained. A particle diameter of silica in the aqueous suspension (S2) was 15 $\mu$m.

[Conjugated Diene Rubber - Silica Mixture (A)]

(Production of SBR-Silica Mixture (A1))

First, 804 parts of the silica aqueous suspension (S1) obtained in said production of S1 was diluted with 2000 parts of pure water and the temperature was raised to 50°C.

Next, the diluted silica aqueous suspension liquid was added with a mixture of 750 parts of the SBR latex (R1) obtained in the production of the R1 and 101 parts of oil emulsion while agitating, so that mixed liquid including co-coagulation of silica and rubber was obtained.

Next, the mixed liquid was added with 10% sulfuric acid to complete the co-coagulation, and a co-coagulated substance was obtained.

The obtained co-coagulated substance was collected by a 40-mesh wire mesh, vacuum dried at 70°C, and an SBR-silica mixture (A1) was obtained. In the present production example, heating at 70°C for 600 minutes was performed at the time of dehydrating the mixture (A1). A content of silica in the mixture (A1) was 65.3 parts with respect to 100 parts of SBR solid compounds, and a content of toluene insoluble components was 47%. Also, a ratio of silica in the entire toluene insoluble components in the mixture (A1) obtained from these values was 68%.

(Production of SBR-Silica Mixture (A2))

Other than not using oil emulsion, using 750 parts of the SBR latex (R2) obtained in the production of the R2 instead of the SBR latex (R1) and using 574 parts of the silica aqueous suspension (S2) obtained in the section of the S2 instead of the silica aqueous suspension (S1), an SBR-silica mixture (A2) was obtained in the same way as in the section of production of the A1. A content of silica in the mixture (A2) was 46.4 parts with respect to 100 parts of SBR solid components, and a content of toluene insoluble components was 42%. Also, a ratio of silica in the entire toluene insoluble components in the mixture (A2) obtained from these values is 73%.

(Production of SBR-Silica Mixture (A3))

Other than using the SBR latex (R3) obtained in the section of production of the R3, mixing 2.5 parts of Si69 (made by Degussa) in the oil emulsion and using 826 parts of silica aqueous suspension (S2) obtained in the section of the S2, a co-coagulated substance was obtained in the same way as in the section of production of the A1. The co-coagulated substance was collected by a 40-mesh wire mesh, dehydrated by using a twin screw extruder and dried, so that an SBR-silica mixture (A3) was obtained. In the present production example, heating respectively at 115°C and 160°C for about two minutes was performed at the time of dehydrating and drying the mixture (A3). A content of silica in the mixture (A3) was 66.8 parts with respect to 100 parts of SBR solid components, and a content of the toluene insoluble components was 48%. Also, a ratio of silica in the entire toluene insoluble components in the mixture (A3) obtained from these values is 66%.

(Production of SBR-Silica Mixture (A4))

Other than changing an amount of the silica aqueous suspension liquid (S2) obtained in the section of production of the S2 to 280 parts and using as silica aqueous suspension liquid what obtained by diluting the result with 700 parts of pure water, an SBR-silica mixture (A4) was obtained in the same way as the production of the A2 explained above. A content of silica in the mixture (A4) was 22.8 parts with respect to 100 parts of SBR solid components, and a content of toluene insoluble components was 26%. Also, a ratio of silica in the entire toluene insoluble components in the mixture obtained from these values is 71%.

[Example 1]

First, in the first step, the SBR-silica mixture (A1) obtained in the section of production of the A1 was mixed with a silane coupling agent (Si75 made by Degussa), zinc oxide (having a grain size of 0.4 μm, zinc oxide #1 made by Honjo Chemical Corporation), stearic acid and antioxidant (Nocrac 6C made by Ouchishinko Chemical Industrial Co., Ltd.) in blending quantities shown in Table 1 by a 50°C open roll, so that a rubber composition 1 was obtained. In this step, a temperature of the rubber composition 1 became 80°C or so and heated for about 4 minutes.

Next, in the second step, by using a Bumbary mixer (Labo Plastomill: model 100C, mixer type B-250 made by Toyo Seiki Seishaku-sho Ltd.), SBR in a blending quantity shown in Table 1 (Nipol 9521 having bound styrene amount of 45%, glass transition temperature of -28°C, oil extension amount of 27.3% and Mooney's viscosity of 50 made by Zeon Corporation) was masticated for 0.5 minute, then, compounding agents of carbon black (Seast 7HM made by Tokai Carbon Co., Ltd.), zinc oxide, stearic acid and antioxidant (Nocrac 6C) in blending quantities shown in Table 1 were added and kneaded for 3.5 minutes, so that a rubber composition 2 was obtained. A temperature at the end of the kneading was 125°C.

Next, in the third step, the rubber composition 1 and the rubber composition 2 in blending quantities shown in Table 1 were kneaded for 3 minutes by the Bumbary mixer. A temperature at discharging after finishing the kneading was 140°C.

Next, in the fourth step, sulfur and a crosslinking accelerator (CBS: N-cyclohexyl-2-benzothiazyl surfenamide and DPG: diphenylguanidine) in blending quantities shown in Table 1 were kneaded with the kneaded rubber composition by a 50°C open roll, so that a rubber composition of the example 1 was obtained.

The obtained rubber composition of the example 1 was subjected to press vulcanization at 160°C for 15 minutes to produce a specimen and respective properties (wet grip performance, fuel efficiency, wear resistance, tensile strength and brittleness temperature) were measured. The results are shown in Table 2.

[Comparative Example 1]

First, in the first step, SBR1 obtained by the section of production of the R1 and SBR (Nipol 9521) in blending quantities shown in Table 1 were masticated for 0.5 minute, then, compounding agents shown in Table 1 were added and kneaded for 4.5 minutes, so that a rubber composition 3 was obtained. A temperature at discharging after finishing the kneading was 150°C.

Next, without performing the second step, in a third step, the rubber composition 3 in a blending quantity shown in Table 1 was kneaded for three minutes by the Bumbary mixer. A temperature at discharging after finishing the kneading was 140°C.

Next, in a fourth step, compounding agents shown in Table 1 in blending quantities shown in Table 1 were added to the kneaded rubber composition and, other than that, a rubber composition of a comparative example 1 was obtained, the specimen was produced and respective properties were measured in the same way as in the example 1. The results are shown in Table 2.

[Comparative Example 2]

First, in a first step, the SBR1 obtained in the section of production of the R1 was added with compounding agents shown in Table 1 in blending quantities shown in Table 1 and kneaded for 4.5 minutes, so that a rubber composition 4 was obtained. A temperature of the rubber composition 4 at discharging after finishing the kneading was 150°C.

Next, in a second step, a rubber composition 2 was obtained in the same method as in the second step of the example 1.

Next, in a third step, the rubber composition 4 and the rubber composition 2 in blending quantities shown in Table 1 were kneaded for 3 minutes by a Bumbary mixer. A temperature at discharging after finishing the kneading was 140°C.

Next, in a fourth step, the kneaded rubber composition was added with compounding agents shown in Table 1 in blending quantities shown in Table 1 and, other than that, a rubber composition of a comparative example 2 was obtained, the specimen was produced and respective properties were measured in the same way as in the example 1. The results are shown in Table 2.

[Comparative Example 3]

First, in the first step, a rubber composition 4 was obtained in the same method as in the first step of the comparative example 2.

Next, without performing the second step, in the third step, the obtained rubber composition 4 and SBR (Nipol 9521) in blending quantities shown in Table 1 were masticated for 0.5 minute, then, compounding agents shown in Table 1 in blending quantities shown in Table 1 were added and kneaded for 3 minutes with a Bumbary mixer. A temperature at discharging after finishing the kneading was 140°C.

Next, in the fourth step, the kneaded rubber composition was added with compounding agents shown in Table 1 in blending quantities shown in Table 1 and, other than that, a rubber composition of a comparative example 3 was obtained, the specimen was produced and respective properties were measured in the same way as in the example 1. The results are shown in Table 2.

[Comparative Example 4]

First, in the first step, a rubber composition 1 was obtained in the same method as in the first step of the example 1.

Next, in the second step, other than using SBR1 instead of the Nipol 9521, a rubber composition 5 was obtained in the same way as in the second step in the example 1.

Next, in the third step, other than using the rubber composition 5 instead of the rubber composition 2, a rubber composition of a comparative example 4 was obtained in the same way as the third step in the example 1 and, furthermore, the fourth step of the example 1. A specimen was produced and respective properties were measured also on the rubber composition of the comparative example 4 in the same way as in the example 1. The results are shown in Table 2.

[Table 1]

Table 1

|  | Example 1 | Comparative Example 1 | Comparative Example 2 | Comparative Example 3 | Comparative Example 4 |
|---|---|---|---|---|---|
| First Step |  |  |  |  |  |
| Mixing Device | Roll | Bumbary | Bumbary | Bumbary | Roll |
| Mixture (A1) [part] | 204.5 | - | - | - | 204.5 |
| Toluene Insoluble Components [wt%] in Mixture (A1) | 47 | - | - | - | 47 |
| SBR1[part] | - | 68.75 | 137.5 | 137.5 | - |
| Nipol9521 [part] | - | 68.75 | - | - | - |
| Silica Powder (sk1) [part] | - | 35 | 70 | 70 | - |
| Silane Coupling Agent [part] | 6.5 | 3.25 | 6.5 | 6.5 | 6.5 |
| Carbon Black [part] | - | 35 | - | - | - |
| Zinc oxide [part] | 2 | 3 | 2 | 2 | 2 |
| Stearic Acid [part] | 2 | 2 | 2 | 2 | 2 |
| Antioxidant [part] | 2 | 2 | 2 | 2 | 2 |
| Generated Rubber Composition | Rubber Composition 1 | Rubber Composition 3 | Rubber Composition 4 | Rubber Composition 4 | Rubber Composition 1 |
| Second Step |  |  |  |  |  |

Table continued

|  | Example 1 | Comparative Example 1 | Comparative Example 2 | Comparative Example 3 | Comparative Example 4 |
|---|---|---|---|---|---|
| First Step |  |  |  |  |  |
| Mixing Device | Bumbary | - | Bumbary | - | Bumbary |
| Nipol9521 [part] | 137.5 | - | 137.5 | - | - |
| SBR1 [part] | - | - | - | - | 137.5 |
| Process Oil [part] | - | - | - | - | - |
| Carbon Black [part] | 70 | - | 70 | - | 70 |
| Zinc oxide [part] | 4 | - | 4 | - | 4 |
| Stearic Acid [part] | 2 | - | 2 | - | 2 |
| Antioxidant [part] | 2 | - | 2 | - | 2 |
| Generated Rubber Composition | Rubber Composition 2 | - | Rubber Composition 2 | - | Rubber Composition 5 |
| Third Step |  |  |  |  |  |
| Mixing Device | Bumbary | Bumbary | Bumbary | Bumbary | Bumbary |
| Rubber Composition 1 [part] | 109 | - | - | - | 109 |
| Rubber Composition 2 [part] | 107 | - | 107 | - | - |
| Rubber Composition 3 [part] | - | 215 | - | - | - |
| Rubber Composition 4 [part] | - | - | 108 | 108 | - |
| Rubber Composition 5 [part] | - | - | - | - | 107 |
| Nipol9521 [part] | - | - | - | 68.75 | - |
| Carbon Black [part] | - | - | - | 35 | - |
| Zinc oxide [part] | - | - | - | 2 | - |
| Stearic Acid [part] | - | - | - | 1 | - |

Table continued

|  | Example 1 | Comparative Example 1 | Comparative Example 2 | Comparative Example 3 | Comparative Example 4 |
|---|---|---|---|---|---|
| First Step |  |  |  |  |  |
| Antioxidant [part] | - | - | - | 1 | - |
| Fourth Step |  |  |  |  |  |
| Mixing Device | Roll | Roll | Roll | Roll | Roll |
| Sulfur [part] | 1.5 | 1.5 | 1.5 | 1.5 | 1.5 |
| CBS [part] | 1.8 | 1.8 | 1.8 | 1.8 | 1.8 |
| DPG [part] | 1.5 | 1.5 | 1.5 | 1.5 | 1.5 |

As shown in Table 1, the rubber composition of the example 1 was obtained as a result that the SBR-silica mixture (A1) including 47% of toluene insoluble components obtained by co-coagulating the SBR latex (R1) having a Tg of -50°C and aqueous suspension of silica (S1) was blended with the SBR (Nipol 9521) having Tg such that the difference in absolute value between Tg of SBR and that of SBR1 in the R1 is 22°C, which belongs to a range of the present invention.
On the other hand, the rubber compositions of the comparative examples 1 to 3 were obtained by mixing in a dry method conjugated diene rubber and silica without co-coagulating. Also, the rubber composition of the comparative example 4 was obtained by furthermore blending SBR1 (that is, SBR having the same Tg) in the SBR-silica mixture (A1) including the SBR1; and none of them belongs to the range of the present invention.
[Table 2]

Table 2

|  | Example 1 | Comparative Example 1 | Comparative Example 2 | Comparative Example 3 | Comparative Example 4 |
|---|---|---|---|---|---|
| Wet Grip Performance [Index *1] | 108 | 100 | 104 | 102 | 67 |
| Fuel Efficiency [Index *1] | 97 | 100 | 100 | 98 | 84 |
| Wear Resistance [Index *1] | 112 | 100 | 102 | 102 | 118 |
| Tensile Strength [Index *1] | 114 | 100 | 100 | 103 | 106 |
| Brittleness Temperature [Δ°C*2] | -2.0 | 0.0 | -0.5 | 0.0 | -10.5 |
| *1: Comparative example 1 is used as reference (100). | | | | | |
| *2: Temperature difference (Δ°C) based on the comparative example 1 | | | | | |

As shown in Table 2, in the composition of the example 1, comparing with compositions of the comparative examples 1 to 4, it is learned that the fuel efficiency, wet grip performance, mechanical (tensile) strength, wear resistance and low temperature brittleness resistance are highly balanced.

[Example 2]

First, in the first step, by using a Bumbary mixer, the SBR-silica mixture (A2) obtained in the section of production of the A2 in a blending quantity shown in Table 3 was masticated for 0.5 minute, then, a silane coupling agent (Si69 made by Degussa), zinc oxide (zinc oxide #1), stearic acid and antioxidant (Nocrac 6C) in blending quantities shown in Table 3 were added and kneaded for 4.5 minutes, so that a rubber composition 6 was obtained. A temperature of the rubber composition 6 was in a range of about 110°C to 150°C and heated for about 4 minutes in this step.

Next, in the second step, by using a Bumbary mixer, solution polymerization terminally modified SBR (Nipol NS-116R having bound styrene amount of 21%, vinyl bonding amount of 63% at a part of butadiene monomer units, glass transition temperature of -25°C and Mooney's viscosity of 45 made by Zeon Corporation) in a blending quantity shown in Table 3 was masticated for 0.5 minute, then, compounding agents of carbon black (Seast KH made by Tokai Carbon Co., Ltd), process oil (Enerthene 1849A made by British Petroleum), zinc oxide, stearic acid, and antioxidant (Nocrac 6C) in blending quantities shown in Table 3 and kneaded for 3.5 minutes, so that a rubber composition 7 was obtained. A temperature at the end of the kneading was 125°C.

Next, in the third step, the rubber composition 6 and the rubber composition 7 in blending quantities shown in Table 3 were kneaded for 3 minutes by a Bumbary mixer. The temperature at discharging when finishing the kneading was 145°C.

Next, in the fourth step, the kneaded rubber composition was added with compounding agents shown in Table 3 in blending quantities shown in Table 3 and, other than that, a rubber composition of the example 2 was obtained, the specimen was produced and respective properties were measured in the same way as in the example 1. The results are shown in Table 4.

[Comparative Example 5]

First, in the first step, after masticating the SBR2 obtained in the section of production of the R2 and SBR (Nipol NS-116R) in blending quantities shown in Table 3 for 0.5 minute, compounding agents shown in Table 3 were added and kneaded for 4.5 minutes, so that a rubber composition 8 was obtained.

Next, without performing the second step, in the third step, the rubber composition 8 in a blending quantity shown in Table 3 was kneaded for 3 minutes by a Bumbary mixer. The temperature at discharging when finishing the kneading was 140°C.

Next, in the fourth step, compounding agents shown in Table 3 in blending quantities shown in Table 3 were added to the kneaded rubber composition and, other than that, a rubber composition of the comparative example 5 was obtained, the specimen was produced and respective properties were measured in the same way as in the example 2. The results are shown in Table 4.

[Comparative Example 6]

First, in the first step, the SBR2 obtained in the section of production of the R2 was added with compounding agents shown in Table 3 in blending quantities shown in Table 3 and kneaded for 4.5 minutes, so that a rubber composition 9 was obtained. The temperature at discharging when finishing the kneading was 150°C.

Next, in the second step, a rubber composition 7 was obtained in the same method as in the second step of the example 2.

Next, in the third step, the rubber composition 9 and the rubber composition 7 in blending quantities shown in Table 3 were kneaded for 3 minutes by a Bumbary mixer. The temperature at discharging when finishing the kneading was 140°C.

Next, in the fourth step, compounding agents shown in Table 3 in blending quantities shown in Table 3 were added to the kneaded rubber composition and, other than that, a rubber composition of the comparative example 6 was obtained, the specimen was produced and respective properties were measured in the same way as in the example 2. The results are shown in Table 4.

[Comparative Example 7]

First, in the first step, the SBR-silica mixture (A4) obtained in the section of production of the A4 and SBR (nipol NS-116R) in blending quantities shown in Table 3 were masticated for 0.5 minute, then, compounding agents shown in Table 3 were added and kneaded for 4.5 minutes, so that a rubber composition 10 was obtained.

Next, other than using the rubber composition 10 instead of the rubber composition 8, a rubber composition of the comparative example 7 was obtained, the specimen was produced and respective properties were measured in the same way as in the fourth step. The results are shown in Table 4.

[Table 3]

Table 3

| | Example 2 | Comparative Example 5 | Comparative Example 6 | Comparative Example 7 |
|---|---|---|---|---|
| First Step | | | | |
| Mixing Device | Bumbary | Bumbary | Bumbary | Bumbary |
| Mixture (A2) [part] | 147 | - | - | - |
| Toluene Insoluble Components [wt%] in Mixture | 42 | - | - | - |
| Mixture (A4) [part] | - | - | - | 62 |
| Toluene Insoluble Components [wt%] in Mixture | - | - | - | 26 |
| SBR2 [part] | - | 50 | 100 | - |
| NipolNS116R [part] | - | 50 | - | 50 |
| Silica Powder(sk2) [part] | - | 25 | 50 | 14 |
| Silane Coupling Agent [part] | 2.3 | 1.2 | 2.5 | 1.2 |
| Carbon Black [part] | - | 25 | - | 25 |
| Process Oil [part] | - | 5 | - | 5 |
| Zinc oxide [part] | 2 | 3 | 2 | 3 |
| Stearic Acid [part] | 2 | 2 | 2 | 2 |
| Antioxidant [part] | 2 | 2 | 2 | 2 |
| Generated Rubber Composition | Rubber Composition 6 | Rubber Composition 8 | Rubber Composition 9 | Rubber Composition 10 |
| Second Step | | | | |
| Mixing Device | Bumbary | - | Bumbary | - |
| NipolNS116R [part] | 100 | - | 100 | - |
| Carbon Black [part] | 50 | - | 50 | - |
| Process Oil [part] | 10 | - | 10 | - |
| Zinc oxide [part] | 4 | - | 4 | - |
| Stearic Acid [part] | 2 | - | 2 | - |
| Antioxidant [part] | 2 | - | 2 | - |
| Generated Rubber Composition | Rubber Composition 7 | - | Rubber Composition 7 | - |
| Third Step | | | | |
| Mixing Device | Bumbary | Bumbary | Bumbary | Bumbary |
| Rubber Composition 6 [part] | 79 | - | - | - |

Table continued

|  | Example 2 | Comparative Example 5 | Comparative Example 6 | Comparative Example 7 |
|---|---|---|---|---|
| First Step |  |  |  |  |
| Rubber Composition 7 [part] | 84 | - | 84 | - |
| Rubber Composition 8 [part] | - | 162 | - | - |
| Rubber Composition 9 [part] | - | - | 79 | - |
| Rubber Composition 10 [part] | - | - | - | 162 |
| Fourth Step | Roll | Roll | Roll | Roll |
| Sulfur [part] | 1.6 | 1.6 | 1.6 | 1.6 |
| CBS [part] | 1.7 | 1.7 | 1.7 | 1.7 |
| DPG [part] | 0.4 | 0.4 | 0.4 | 0.4 |

As shown in Table 3, the rubber composition of the example 2 was obtained as a result that the SBR-silica mixture (A2) including 42% of toluene insoluble components obtained by co-coagulating the SBR latex (R2) having a Tg of -50°C and aqueous suspension liquid of silica (S2) was blended with the solution polymerization SBR (Nipol NS-116R) having Tg such that the difference in absolute value between the Tg of SBR and that of SBR2 in the R2 is 25°C, which belongs to a range of the present invention.

On the other hand, the rubber compositions of the comparative examples 5 and 6 were obtained by mixing in a dry method conjugated diene rubber and silica without co-coagulating. Also, the rubber composition of the comparative example 7 was obtained by using the SBR-silica mixture (A4) having a content of toluene insoluble components of 26%; and none of them belongs to the range of the present invention.

[Table 4]

Table 4

|  | Example 2 | Comparative Example 5 | Comparative Example 6 | Comparative Example 7 |
|---|---|---|---|---|
| Wet Grip Performance [Index *3] | 105 | 100 | 101 | 102 |
| Fuel Efficiency [Index *3] | 86 | 100 | 95 | 93 |
| Wear Resistance [Index *3] | 117 | 100 | 108 | 109 |
| Tensile Strength [Index *3] | 124 | 100 | 101 | 110 |
| Brittleness Temperature [Δ °C *4] | -2.5 | 0.0 | -0.5 | 0.0 |
| *3: Comparative example 5 is used as reference (100). | | | | |
| *4: Temperature difference (Δ°C) based on the comparative example 5 | | | | |

As shown in Table 4, in the composition of the example 2, comparing with compositions of the comparative examples 5 to 7, it is learned that the fuel efficiency, wet grip performance, mechanical (tensile) strength, wear resistance and low temperature brittleness resistance are highly balanced.

[Example 3]

First, in the first step, by using a Bumbary mixer, the SBR-silica mixture (A3) in a blending quantity shown in Table 5 obtained by the section of production of the A3 was masticated for 0.5 minute, then, a silane coupling agent (Si69), carbon black (Seast 7HM), process oil, zinc oxide, stearic acid, paraffin wax and antioxidant (Nocrac 6C) in blending quantities shown in Table 5 were added and kneaded for 4.5 minutes, so that a rubber composition 11 was obtained. The temperature at the end of the kneading was 145°C.

Next, in the second step, by using a Bumbary mixer, the rubber composition 11 in a blending quantity shown in Table 5 was masticated for 0.5 minute, then, polybutadiene rubber in a blending quantity shown in Table 5 (high-cis BR: Nipol BR1220N having cis bonding amount of 97%, glass transition temperature of -110°C, Mooney's viscosity of 43.5 wt% and toluene solution viscosity of 96 cps. Made by Zeon Corporation) was added and kneaded for 3.5 minutes. The temperature at discharging when finishing the kneading was 135°C.

Next, without performing the third step, in the fourth step, the kneaded rubber composition was added with compounding agents shown in Table 5 in blending quantities shown in Table 5 and, other than that, a rubber composition of the example 3 was obtained, the specimen was produced and respective properties were measured in the same way as in the example 1. The results are shown in Table 6.

[Comparative Example 8]

First, in the first step, the SBR3 obtained by the section of production of the R3 and high-cis BR (Nipol BR1220N) in blending quantities shown in Table 5 were masticated for 0.5 minute, then, compounding agents shown in Table 5 were added and kneaded for 4.5 minutes, so that a rubber composition 12 was obtained. The temperature at discharging when finishing the kneading was 150°C.

Next, in the second step, the rubber composition 12 in a blending quantity shown in Table 5 was kneaded for 3 minutes by a Bumbary mixer. The temperature at discharging when finishing the kneading was 140°C.

Next, without performing the third step, in the fourth step, the kneaded rubber composition was added with compounding agents shown in Table 5 in blending quantities shown in Table 5 and, other than that, a rubber composition of the comparative example 8 was obtained, the specimen was produced and respective properties were measured in the same way as in the example 3. The results are shown in Table 6.

[Comparative Example 9]

First, in the first step, the SBR3 obtained by the section of production of the R3 was added with compounding agents shown in Table 5 in blending quantities shown in Table 5 and kneaded for 4.5 minutes, so that a rubber composition 13 was obtained. The temperature at discharging when finishing the kneading was 150°C.

Next, in the second step, the rubber composition in a blending quantity shown in Table 5 was masticated for 0.5 minute, then, high-cis BR (Nipol BR1220N) in a blending quantity shown in Table 5 was added and kneaded for 3.5 minutes. The temperature at discharging when finishing the kneading was 135°C.

Next, without performing the third step, in the fourth step, the kneaded rubber composition was added with compounding agents shown in Table 5 in blending quantities shown in Table 5 and, other than that, a rubber composition of the comparative example 9 was obtained, the specimen was produced and respective properties were measured in the same way as in the example 3. The results are shown in Table 6.

[Comparative Example 10]

First, in the first step, a rubber composition 11 was obtained in the same way as in the first step in the example 3.

Next, in the second step, other than using the BR1 in a blending quantity shown in Table 5 obtained in the section of production of the BR1 instead of the high-cis BR (Nipol BR 1220N), the same processing was performed as in the second step of the example 3.

Next, without performing the third step, in the fourth step, a rubber composition of the comparative example 10 was obtained, the specimen was produced and respective properties were measured in the same way as in the fourth step of the example 3. The results are shown in Table 6.

[Table 5]

Table 5

| | Example 3 | Comparative Example 8 | Comparative Example 9 | Comparative Example 10 |
|---|---|---|---|---|
| First Step | | | | |
| Mixing Device | Bumbary | Bumbary | Bumbary | Bumbary |
| Mixture (A3) [part] | 165 | - | - | 165 |
| Toluene Insoluble Components [wt%] in Mixture | 48 | - | - | 48 |
| SBR3 [part] | - | 110 | 110 | - |
| BR1220N [part] | - | 20 | - | - |
| Silica Powder(sk2) [part] | - | 56 | 56 | - |
| Silane Coupling Agent [part] | 1.4 | 2.8 | 2.8 | 1.4 |
| Carbon Black [part] | 14 | 14 | 14 | 14 |
| Process Oil [part] | 10 | 10 | 10 | 10 |
| Paraffin Wax [part] | 1 | 1 | 1 | 1 |
| Zinc oxide [part] | 3 | 3 | 3 | 3 |
| Stearic Acid [part] | 2 | 2 | 2 | 2 |
| Antioxidant [part] | 2 | 2 | 2 | 2 |
| Generated Rubber Composition | Rubber Composition 11 | Rubber Composition 12 | Rubber Composition 13 | Rubber Composition 11 |
| Second Step | | | | |
| Mixing Device | Bumbary | Bumbary | Bumbary | Bumbary |
| Rubber Composition 11 [part] | 197 | - | - | 197 |
| Rubber Composition 12 [part] | - | 217 | - | - |
| Rubber Composition 13 [part] | - | - | 197 | - |
| BR122ON [part] | 20 | - | 20 | - |
| BR1 [part] | - | - | - | 20 |
| Fourth Step | Roll | Roll | Roll | Roll |
| Sulfur [part] | 1.6 | 1.6 | 1.6 | 1.6 |
| CBS [part] | 1.7 | 1.7 | 1.7 | 1.7 |
| DPG [part] | 0.7 | 0.7 | 0.7 | 0.7 |

As shown in Table 5, the rubber composition of the example 3 was obtained as a result that the SBR-silica mixture (A3) including 48% of toluene insoluble components obtained by co-coagulating the SBR latex (R3) having a Tg of -40°C and aqueous suspension liquid of silica (S2) was blended with the high-cis BR (Nipol BR1220N) having Tg such that the difference in absolute value between Tg of high-cis BR and that of SBR3 in the R3 is 70°C, which belongs to a range of the present invention.

On the other hand, the rubber compositions of the comparative examples 8 and 9 were obtained by mixing in a dry method conjugated diene rubber and silica without co-coagulating. Also, the rubber composition of the comparative example 10 was obtained by blending BR1 (Tg: -41°C), having Tg such that the difference in absolute value between Tg of BR1 and that of SBR3 is 1°C, in the SBR-silica mixture (A3) including the SBR3 (Tg: -40°C); and none of them belongs to the range of the present invention.

[Table 6]

Table 6

| | Example 3 | Comparative Example 8 | Comparative Example 9 | Comparative Example 10 |
|---|---|---|---|---|
| Wet Grip Performance [Index *5] | 110 | 100 | 105 | 125 |
| Fuel Efficiency [Index *5] | 89 | 100 | 101 | 109 |
| Wear Resistance [Index *5] | 104 | 100 | 100 | 98 |
| Tensile Strength [Index *5] | 134 | 100 | 95 | 140 |
| Brittleness Temperature [$\Delta$°C*6] | -3.5 | 0.0 | -2.0 | 12.0 |
| *5: Comparative example 8 is used as reference (100). *6: Temperature difference ($\Delta$°C) based on the comparative example 8 | | | | |

As shown in Table 6, in the composition of the example 3, comparing with compositions of the comparative examples 8 to 10, it is learned that the fuel efficiency, wet grip performance, mechanical (tensile) strength, wear resistance and low temperature brittleness resistance are highly balanced.

## Claims

1. A silica-containing conjugated diene rubber composition comprising a conjugated diene rubber - silica mixture (A) containing at least 30 wt% of toluene insoluble components obtainable by co-coagulating an aqueous dispersion or solution of conjugated diene rubber (a) having a glass transition temperature of -120 to 0°C with an aqueous dispersion of silica, blended with
a conjugated diene rubber (b) having a glass transition temperature such that the difference in absolute value between the glass transition temperature of rubber (b) and that of rubber (a) is 3 to 100 °C.

2. The silica-containing conjugated diene rubber composition as set forth in claim 1, wherein the conjugated diene rubber - silica mixture (A) contains 25 to 200 parts by weight of silica with respect to 100 parts by weight of conjugated diene rubber (a).

3. The silica-containing conjugated diene rubber composition as set forth in claim 1, wherein the amount of silica contained in the conjugated diene rubber - silica mixture (A) is 80 wt% or smaller with respect to the entire toluene insoluble components in the conjugated diene rubber -silica mixture (A).

4. The silica-containing conjugated diene rubber composition as set forth in claim 1, wherein the conjugated diene rubber -silica mixture (A) is obtainable by a step of being heated to 50 to 220°C after co-coagulation, but before blending the conjugated diene rubber (b).

5. The silica-containing conjugated diene rubber composition as set forth in claim 1, wherein the glass transition temperature of the conjugated diene rubber (a) is -80 to -15°C.

6. The silica-containing conjugated diene rubber composition as set forth in claim 1, wherein the difference in absolute value between the glass transition temperature of conjugated diene rubber (b) and that of conjugated diene rubber (a) is 10 to 95°C.

7. The silica-containing conjugated diene rubber composition as set forth in claim 1, wherein the conjugated diene rubber (a) comprises a rubber selected from natural rubber, styrene butadiene copolymer rubber and acrylonitrile butadiene copolymer rubber, and the conjugated diene rubber (b) comprises a rubber selected from natural rubber, styrene butadiene copolymer rubber, polybutadiene rubber and polyisoprene rubber.

8. The silica-containing conjugated diene rubber composition as set forth in claim 1, wherein the conjugated diene rubber (a) is a styrene butadiene copolymer rubber and the conjugated diene rubber (b) is a styrene butadiene copolymer rubber or polybutadiene rubber.

9. The silica-containing conjugated diene rubber composition as set forth in claim 1, wherein the conjugated diene rubber (b) contains 1 to 200 parts by weight of filler with respect to 100 parts by weight of the conjugated diene rubber (b).

10. The silica-containing conjugated diene rubber composition as set forth in claim 1, wherein the weight ratio of the conjugated diene rubber (a) to the conjugated diene rubber (b) is 95:5 to 5:95.

11. A crosslinkable silica-containing conjugated diene rubber composition comprising the silica-containing conjugated diene rubber composition as set forth in claim 1, and further a crosslinking agent.

12. A molding made by molding and crosslinking the crosslinkable silica-containing conjugated diene rubber composition as set forth in claim 11.

13. A production method of a silica-containing conjugated diene rubber composition comprising:

a step of co-coagulating an aqueous dispersion or solution of the conjugated diene rubber (a) having a glass transition temperature of -120 to 0°C and an aqueous dispersion of silica to obtain a co-coagulated mass;
a step of heating said co-coagulated mass to 50 to 220°C to obtain a conjugated diene rubber - silica mixture (A) containing at least 30wt% of toluene insoluble components; and
a step of blending a conjugated diene rubber (b) with the conjugated diene rubber - silica mixture (A); said rubber (b) having a glass transition temperature such that the difference in absolute value between the glass transition temperature of rubber (b) and that of rubber (a) is 3 to 100°C.

| | **INTERNATIONAL SEARCH REPORT** | International application No. |
|---|---|---|
| | | PCT/JP2004/016124 |

**A. CLASSIFICATION OF SUBJECT MATTER**
Int.Cl⁷ C08L21/00, C08K3/36

According to International Patent Classification (IPC) or to both national classification and IPC

**B. FIELDS SEARCHED**

Minimum documentation searched (classification system followed by classification symbols)
Int.Cl⁷ C08L7/00-21/00

Documentation searched other than minimum documentation to the extent that such documents are included in the fields searched

| Jitsuyo Shinan Koho | 1926-2004 | Toroku Jitsuyo Shinan Koho | 1994-2004 |
|---|---|---|---|
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | EP 1245630 A1 (THE YOKOHAMA RUBBER CO., LTD.), 02 October, 2002 (02.10.02), Claims 1, 8 to 11; Par. Nos. [0015] to [0019], [0065] & WO 02/10273 A1 Page 3, line 22 to page 4, line 16; page 16, lines 24 to 26; Claims 1, 8 to 11 & US 2003/55169 A1 | 1-13 |
| A | US 2001/51685 A1 (BAYER CORP.), 13 December, 2001 (13.12.01), Claim 1; Par. Nos. [0010] to [0019], [0037] & JP 2001-354807 A Claim 1; Par. Nos. [0010], [0029] & EP 1149868 A2 | 1-13 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 November, 2004 (26.11.04) | 14 December, 2004 (14.12.04) |

| Name and mailing address of the ISA/ Japanese Patent Office | Authorized officer |
|---|---|
| | |
| Facsimile No. | Telephone No. |

Form PCT/ISA/210 (second sheet) (January 2004)